# EUROPÄISCHE PATENTSCHRIFT

(11) **EP 0 927 496 B1**
(45) Veröffentlichungstag und Bekanntmachung des Hinweises auf die Patenterteilung: **21.04.2004**
(21) Anmeldenummer: 97923778.1
(22) Anmeldetag: 30.04.1997
(51) Int. Cl.: H04N 9/75

(54) **VORRICHTUNG UND VERFAHREN ZUR ERZEUGUNG EINES KOMPOSITBILDES**
DEVICE AND PROCESS FOR PRODUCING A COMPOSITE PICTURE
PROCEDE ET DISPOSITIF POUR PRODUIRE UNE IMAGE COMPOSITE

(30) Priorität: 30.04.1996 DE 19619090
(43) Veröffentlichungstag der Anmeldung: 07.07.1999
(73) Patentinhaber: CFB Centrum für neue Bildgestaltung GmbH, 12489 Berlin (DE)
(72) Erfinder: RYBCZYNSKI, Zbigniew, D-12159 Berlin (DE)
(86) Internationale Anmeldenummer: PCT/DE1997/000893
(87) Internationale Veröffentlichungsnummer: WO 1997/041693

(56) Entgegenhaltungen:
- GB-A- 2 259 214
- US-A- 5 194 941
- US-A- 5 313 275

## Beschreibung

Die Erfindung betrifft eine Vorrichtung gemäß dem Oberbegriff des Anspruchs 1 bzw. ein Verfahren gemäß dem Oberbegriff des Anspruchs 11.

Aus US-PS 4 100 569 ist eine derartige Vorrichtung bekannt, welche die Zusammensetzung zweier Bilder nach dem sogenannten "Blue-Screen"-Verfahren ermöglicht.

Das eine Bild - im folgenden auch als Vordergrundbild bezeichnet - stellt hierbei ein Objekt oder eine räumliche Szene vor einem im wesentlichen monochromen, vorzugsweise blauen, Hintergrund dar, was aufgrund des Farbunterschieds in dem Bild eine Trennung des Objekts bzw. der räumlichen Szene von dem blauen Hintergrund ermöglicht.

Das andere Bild - im folgenden auch als Hintergrundbild bezeichnet - gibt dagegen einen beliebigen Hintergrund wieder, in den das Objekt bzw. die räumliche Szene des Vordergrundbildes eingeblendet werden soll. So ist es beispielsweise möglich, einen Fernsehmoderator in einem Fernsehstudio vor einem blauen Hintergrund ("Blue-Screen") aufzunehmen und anschließend in eine beliebige Studiokulisse einzublenden, die zuvor als separates Bild aufgenommen wurde.

Die bekannte Vorrichtung berechnet hierzu für jeden Bildpunkt aus den Farbwerten des Vordergrundbildes zwei Steuerparameter, wobei der erste Steuerparameter ("Background Control Voltage") angibt, wie stark das Hintergrundbild in das resultierende Bild - im folgenden auch als Kompositbild bezeichnet - eingeblendet werden soll, während der zweite Steuerparameter ("Clamping Voltage") bestimmt, in welchem Maße die Farbe des blauen Hintergrunds in dem Kompositbild verringert wird, um die störende Farbwirkung des blauen Hintergrunds zu unterdrücken.

Das Kompositbild wird dann von einem Bildmischer aus den mit dem ersten Steuerparameter gewichteten Farbwerten des Hintergrundbildes einerseits und den Farbwerten des Vordergrundbildes andererseits zusammengesetzt, wobei die blaue Farbkomponente des Vordergrundbildes entsprechend dem zweiten Steuerparameter herabgesetzt ist.

Wichtig ist in diesem Zusammenhang, daß die Farbkomponenten des Vordergrundbildes bei der Mischung des Kompositbildes in jedem Bildpunkt berücksichtigt werden. Das Vordergrundbild wird also keinem Schaltvorgang unterworfen, der das Kompositbild entweder aus den Farbwerten des Vordergrundbildes oder aus den Farbwerten des Hintergrundbildes zusammensetzt. Zum einen ermöglicht dies auch die Wiedergabe semi-transparenter Objekte im Vordergrundbild, die dann in dem Kompositbild das neue Hintergrundbild anstelle des blauen Eintergrunds durchscheinen lassen. Zum anderen bleibt auf diese Weise die optische Auflösung des Vordergrundbildes vollständig erhalten.

Die jüngeren US-PS 5 424 781, 5 343 252, 4 625 231, 4 589 013 und 4 344 085 beschreiben Weiterbildungen des eingangs beschriebenen Verfahrens, wobei im wesentlichen die Formeln zur Berechnung der beiden Steuerparameter durch diverse Korrekturfaktoren modifiziert werden, um auch bei schwierigen Farbzusammensetzungen des Vordergrundbildes ein optisch befriedigendes Komposit-Bild zu erzeugen.

Die aus den vorgenannten Druckschriften bekannten Verfahren ermöglichen zwar eine Zusammensetzung zweier Bilder zu einem Kompositbild gemäß dem "Blue-Screen"-Verfahren, liefern jedoch, insbesondere bei bestimmten Farbzusammensetzungen des Vordergrundbildes, ein optisch unnatürlich wirkendes Kompositbild, was im professionellen Einsatz beispielsweise zur Erzeugung von Spezialeffekten in der Filmindustrie ein aufwendiges manuelles Nachbessern des Kompositbildes erfordert.

Weiterhin ist aus den vorgenannten Druckschriften, insbesondere aus US-PS 4 589 013, das sogenannte "Chroma-Key"-Verfahren bekannt, das ebenfalls die Zusammensetzung zweier Bilder zu einem Kompositbild ermöglicht, wobei die einzelnen Bildpunkte des Kompositbildes jedoch - im Gegensatz zu dem eingangs beschriebenen Verfahren - entweder aus den Farbkomponenten des Vordergrundbildes oder aus den Farbkomponenten des Hintergrundbildes zusammengesetzt werden. Das Vordergrundbild ist hierbei also einem Schaltvorgang unterworfen, was wegen der analogen Bilddarstellung zu einer entsprechenden Verringerung der optischen Auflösung führt und die Wiedergabe semi-transparenter Objekte erschwert.

US-A-5 194 941 beschreibt eine Anordnung zur Erzeugung eines Kompositbildes aus einem Vordergrundbild mit einem im wesentlichen monochromen Hindergrund und einem Hintergrundbild, bei der die Farbanteile von Bildpunkten, die als einer Kontur zugehörig erkannt wurden, aus den Farbanteilen von Vordergrund- und Hintergrundbild gemischt werden. Weiterhin werden, um Transparenzeffekte sichtbar zu machen, Farb- und Luminanzanteil des Kompositbildes in Bereichen des Hindergrunds abhängig von der Differenz der Luminanzteile des Vordergrundbildes und des Hintergrunds korrigiert.

Der Erfindung liegt somit die Aufgabe zugrunde, eine Vorrichtung bzw. ein Verfahren zu schaffen, um ein Vordergrundbild und ein Hintergrundbild zu einem Kompositbild mit natürlicher Bildwirkung zusammenzusetzen, wobei das Vordergrundbild ein Objekt bzw. eine Szenerie vor einem im wesentlichen monochromen Hintergrund darstellt.

Die Aufgabe wird, ausgehend von einer Vorrichtung gemäß dem Oberbegriff des Anspruchs 1, durch dessen kennzeichnende Merkmale bzw. - hinsichtlich des Verfahrens - durch die Merkmale des Anspruchs 11 gelöst.

Die Erfindung geht von der Erkenntnis aus, daß die mit einer Zusammensetzung des Kompositbildes entweder aus dem Bildinhalt des Vordergrundbildes oder aus dem Bildinhalt des Hintergrundbildes normalerweise verbundene Verringerung der optischen Auflösung entfällt, wenn die Bildverarbeitung digital erfolgt und die Trennung des Vordergrundbildes in Objekt einerseits und den monochromen Hintergrund andererseits individuell für jedes Rasterelement erfolgt.

Die Erfindung schließt deshalb die technische Lehre ein, sowohl Vordergrundbild als auch Hintergrundbild in digitaler Form bereitzustellen und das Kompositbild in jedem Rasterelement entweder aus den Farbwerten des korrespondierenden Rasterelements des Vordergrundbildes oder aus den Farbwerten des korrespondierenden Rasterelements des Hintergrundbildes zusammenzusetzen, wobei das Kompositbild annschließend mittels einer Bildverarbeitungseinheit weiterbearbeitet wird, um beispielsweise Transparenzeffekte nachbilden zu können.

Der Begriff Farbwert ist hierbei und im folgenden allgemein zu verstehen und bedeutet lediglich, daß sich aus dem bzw. den Farbwerten der Bildeindruck des jeweiligen Rasterelements berechnen läßt. In der bevorzugten Ausführungsform der Erfindung geben die Farbwerte jedoch entsprechend dem bekannten RG3-Farbmodell die Intensität der drei Grundfarben Rot, Grün und Blau wieder und werden durch Zahlenwerte zwischen 0 und 255 repräsentiert, wobei ein großer Zahlenwert für eine große Intensität der zugehörigen Farbkomponente steht.

Ebenfalls allgemein zu verstehen ist der Begriff des monochromen Hintergrunds vor dem das Objekt bzw. die Szene in dem Vordergrundbild dargestellt ist. Monochrom bedeutet hierbei nicht, daß jedes Rasterelement im Bereich des Hintergrunds ausschließlich eine Farbkomponente enthält, während die beiden anderen Farbkomponenten gleich Null sind. Entscheidend ist vielmehr, daß eine Farbkomponente - vorzugsweise Blau - gegenüber den beiden anderen Farbkomponenten vorherrschend ist und daß die Farbzusammensetzung innerhalb des den Hintergrund bildenden Bildbereichs möglichst wenig schwankt.

Die Trennung des Vordergrundbildes in das Objekt bzw. die Szene einerseits und den monochromen Hintergrund andererseits erfolgt durch eine erste Recheneinheit, die für jedes Rasterelement in Abhängigkeit von den Farbwerten des Vordergrundbildes einerseits und die Farbzusammensetzung des monochromen Hintergrunds wiedergebenden vorgegebenen Farbwerten andererseits jeweils ein Steuersignal berechnet, das die Zugehörigkeit des jeweiligen Rasterelements zu dem Objekt bzw. der Szene oder dem monochromen Hintergrund angibt.

Die Zusammensetzung des Kompositbildes erfolgt dann durch eine Auswahleinheit, die die Farbwerte jedes Rasterelements entweder aus den Farbwerten des korrespondierenden Rasterelements des Vordergrundbildes oder aus den Farbwerten des korrespondierenden Rasterelements des Hintergrundbildes berechnet.

Bei der Trennung von Objekt bzw. Szene und Hintergrund in dem Vordergrundbild ist es wichtig, daß die vorgegebenen Farbwerte, die die Farbzusammensetzung des monochromen Hintergrunds wiedergeben, möglichst genau mit der tatsächlichen Farbzusammensetzung des monochromen Hintergrunds übereinstimmen. Dies ist jedoch schwierig, da das Vordergrundbild oftmals als digitalisierte Photographie vorliegt, so daß der Benutzer keine Informationen über die Farbzusammensetzung des bei der Aufnahme verwendeten monochromen Hintergrunds hat.

In einer Ausführungsform der Erfindung ist deshalb vorgesehen, die Farbzusammensetzung des monochromen Hintergrunds zu bestimmen, indem die Durchschnittswerte der einzelnen Farbkomponenten innerhalb des gesamten Vordergrundbildes berechnet werden. Die auf diese Weise ermittelten Werte stimmen insbesondere dann relativ gut mit den tatsächlichen Farbwerten des monochromen Hintergrunds überein, wenn das Objekt bzw. die Szene in dem Vordergrundbild nur einen kleinen Teil einnimmt, während der Großteil des Vordergrundbildes von dem monochromen Hintergrund ausgefüllt wird. Da diese Durchschnittswerte jedoch stets mehr oder weniger von den tatsächlichen Farbwerten des monochromen Hintergrunds abweichen, ist gemäß einer Ausführungsform eine Eingabeeinheit vorgesehen, über die der Benutzer, ausgehend von den zuvor beschriebenen Durchschnittswerten, die vorgegebenen Farbwerte ändern kann, um ein besseres Ergebnis bei der Trennung des Objekts bzw. der Szene von dem monochromen Hintergrund zu erzielen.

In der bevorzugten Ausführungsform der Erfindung wird das Steuersignal, das von der ersten Recheneinheit berechnet wird und in jedem Rasterelement eine Unterscheidung von Objekt bzw. Szene einerseits und monochromem Hintergrund andererseits ermöglicht, in einer Speichermatrix abgespeichert, was eine spätere Überarbeitung des Kompositbildes getrennt für das Objekt bzw. die Szene und den neuen Hintergrund ermöglicht. Jeder Speicherplatz der Speichermatrix ist hierbei einem Rasterelement eindeutig zugeordnet und enthält beispielsweise eine "1", falls das Rasterelement zum monochromen Hintergrund gehört und eine "0", falls das Rasterelement einen Teil des Objekts bzw. der Szene darstellt.

Nach der Berechnung der Farbwerte in den einzelnen Rasterelementen des Kompositbildes erfolgt gemäß der Erfindung eine weitere Bearbeitung des Kompositbildes, um einen möglichst natürlichen Bildeindruck des Kompositbildes zu erzielen. Hierzu weist die Vorrichtung eine zweite Recheneinheit auf, die für jedes Rasterelement des Kompositbildes in Abhängigkeit von den Farbwerten des korrespondierenden Rasterelements des Vordergrundbildes und/oder den Farbwerten des korrespondierenden Rasterelements des Hintergrundbildes Korrekturwerte berechnet. Die eigentliche Bearbeitung erfolgt dann durch eine mit der zweiten Recheneinheit verbundene Bildverarbeitungseinheit, die die Farbwerte der einzelnen Rasterelemente des Kompositbildes entsprechend den von der zweiten Recheneinheit ermittelten Korrekturwerten abändert, um einen natürlichen Bildeindruck zu erzielen.

In einer weiterbildenden Variante der Erfindung von eigener schutzwürdiger Bedeutung ist vorgesehen, die Farbwirkung des Hintergrundbildes auf das Objekt bzw. die Szene zu berücksichtigen. Wird ein Objekt beispielsweise in ein stark rötliches Hintergrundbild eingeblendet, so wirkt das Objekt bei einer farblich unveränderten Wiedergabe vor dem neuen Hintergrund wegen des großen Farbkontrasts unnatürlich. Zur Erreichung eines natürlichen Bildeindrucks ist es deshalb vorteilhaft, die Farbzusammensetzung des Objekt bzw. der Szene an die Farbzusammensetzung des Hintergrundbildes anzupassen. Bei dem vorstehend beschriebenen Beispiel der Einblendung des Objekts in einen rötlichen Hintergrund bedeutet dies, daß in dem durch das Objekt ausgefüllten Bildbereich des Kompositbildes die Intensität der roten Farbkomponente erhöht wird.

In dieser Variante der Erfindung ermittelt die zweite Recheneinheit für jedes Rasterelement des Kompositbildes im Bereich des von dem Objekt bzw. der Szene ausgefüllten Bildbereichs Korrekturwerte, die die Farbwirkung des Hintergrundbildes auf das Objekt bzw. die Szene wiedergeben.

In einer bevorzugten Ausführungsform dieser Variante. ist vorgesehen, die Korrekturwerte in einer Speichermatrix abzuspeichern, wobei jedem Element der Speichermatrix ein Rasterelement des Komposit-Bildes eindeutig zugeordnet ist. Bei einer separaten Bilddarstellung des Inhalts dieser Speichermatrix kann der Benutzer so einen Überblick über die Farbwirkungen des Hintergrundbildes auf das eingeblendete Objekt erhalten, ohne das Kompositbild mit allen Einzelheiten betrachten zu müssen.

Die Berechnung der Korrekturwerte erfolgt hierbei vorzugsweise unter Berücksichtigung der Farbverteilung in dem Hintergrundbild, in welches das Objekt bzw. die Szene des Vordergrundbildes eingeblendet wird. Wird das Objekt beispielsweise in der Mitte des Hintergrundbildes eingeblendet und ist das Kompositbild auf der rechten Seite rötlich, auf der linken Seite dagegen eher grünlich, so ist es zur Erreichung einer natürlichen Farbwirkung des Objekts zweckmäßig, die Farbzusammensetzung des Objekts entsprechend auf der rechten Seite ins rötliche, auf der linken Seite dagegen in grünliche zu verschieben.

Die zweite Recheneinheit teilt den von dem Hintergrundbild ausgefüllten Bereich des Kompositbildes hierzu in eine Vielzahl von kleineren Bildbereichen und berechnet für jeden dieser Bildbereiche einen repräsentativen Farbwert, indem beispielsweise die Durchschnittswerte der einzelnen Farbkomponenten über alle Rasterelemente des jeweiligen Bildbereichs ermittelt wird. Bei der Berechnung der Korrektürwerte für die einzelnen Rasterelemente wird nun die Farbbeeinflussung durch die einzelnen Bildbereiche getrennt betrachtet, wobei die Farbbeeinflussung jeweils mit dem Abstand zwischen dem betrachteten Rasterelement und dem jeweiligen Bildbereich gewichtet. Dies bedeutet, daß bei der Berechnung des Korrekturwerts für ein bestimmtes Rasterelement ein weit entferntes Rasterelement nur geringe Auswirkungen hat, während ein unmittelbar benachbartes Rasterelement die Farbwirkung des betrachteten Rasterelements relativ stark beeinflußt, was zu einem natürlichen Farbeindrucks des Objekts bzw. der Szene vor dem Hintergrundbild führt.

In einer anderen weiterbildenden Variante der Erfindung von eigener schutzwürdiger Bedeutung ist vorgesehen, bei der Berechnung der Korrekturwerte für das Kompositbild Transparenzeffekte zu berücksichtigen. Betrachtet man beispielsweise eine Flasche aus grünlichem Glas, die in ein rötliches Hintergrundbild eingeblendet wird, so muß die Flasche in dem Kompositbild in einem leicht gelblichen Farbton dargestellt werden, da der rötliche Hintergrund durch die Flasche hindurchscheint.

Zur Berücksichtigung von Transparenzeffekten ist es also zum einen erforderlich, dem Kompositbild in dem transparenten Bildbereich das Hintergrundbild zuzumischen.

Zum anderen muß die störende Farbverfälschung unterdrückt werden, die von dem monochromen Hintergrund herrührt, der durch das transparente Objekt des Vordergrundbildes hindurchscheint.

In dieser Variante der Erfindung ermittelt die zweite Recheneinheit deshalb für jedes Rasterelement des Vordergrundbildes aus dessen Farbwerten einen Transparenzwert, der die Durchsichtigkeit des jeweiligen Rasterelements wiedergibt. Hierbei wird die Tatsache ausgenutzt, daß die Farbkomponenten eines transparenten Objekts entsprechend der Farbzusammensetzung des monochromen Hintergrund verändert sind.

Der Transparenzwert wird anschließend einem Bildmischer zugeführt, der dem Kompositbild in dem durch das transparente Objekt bzw. die Szene des Vordergrundbildes ausgefüllten Bildbereich zum einen die Bildinformation des Hintergrundbildes zumischt und zum anderen die von dem monochromen Hintergrund herrührende Farbverfälschung unterdrückt. Hierzu werden die Farbkomponenten des Kompositbildes in dem ein transparentes Objekt darstellenden Bildbereich entsprechend der Farbzusammensetzung des monochromen Hintergrunds herabgesetzt.

In einer bevorzugten Ausführungsform dieser Variante wird der Transparenzwert in einer separaten Speichermatrix abgespeichert, was bei einer bildhaften Darstellung des Inhalts dieser Speichermatrix einen raschen Überblick über den Einfluß von Transparenzwirkungen ermöglicht.

Gemäß einer anderen weiterbildenden Variante der Erfindung von eigener schutzwürdiger Bedeutung ist vorgesehen, in dem Kompositbild die Schattenbildung des Objekts bzw. der Szene auf das Hintergrundbild zu berücksichtigen. So wirft ein Objekt bei der Aufnahme vor einem monochromen Hintergrund in der Regel einen Schatten auf den Hintergrund, der in dem Kompositbild wegen der Trennung von Objekt einerseits und monochromem Hintergrund andererseits nicht entsprechend wiedergegeben wird.

In dieser Variante der Erfindung ist deshalb vorgesehen, für jedes Rasterelement des Kompositbildes in dem durch das Hintergrundbild eingenommenen Bereich mittels der zweiten Recheneinheit in Abhängigkeit von den Farbwerten der korrespondierenden Rasterelemente des Vordergrundbildes einen Korrekturwert zu bestimmen, der den Einfluß der Schattenbildung in dem Kompositbild wiedergibt.

Dieser Korrekturwert wird anschließend der Bildverarbeitungseinheit zugeführt, die das Kompositbild zur Darstellung der Schattenbildung in Abhängigkeit von dem Korrekturwert abdunkelt. In der bevorzugten Ausführungsform dieser Variante ist eine Eingabeeinheit vorgesehen, die mit der Bildverarbeitungseinheit verbunden ist und die Eingabe eines Steuerfaktors ermöglicht, der die Härte der Schattenbildung im Kompositbild steuert. Auf diese Weise kann der Benutzer in dem Kompositbild die Härte der von dem Objekt bzw. der Szene auf das Hintergrundbild geworfenen Schatten stufenlos einstellen.

In einer vorteilhaften Ausführungsform dieser Variante ist vorgesehen, die Korrekturwerte, welche die Intensität der Schattenbildung wiedergeben, in einer Speichermatrix abzuspeichern, wobei jeder Speicherplatz der Speichermatrix einem Rasterelement des Kompositbildes zugeordnet. Durch eine Bilddarstellung des Inhalts dieser Speichermatrix kann der Benutzer so einen Überblick über die Schattenverteilung erhalten, ohne das Kompositbild mit allen Einzelheiten darstellen zu müssen.

Das Objekt erzeugt jedoch bei der Aufnahme vor dem monochromen Hintergrund nicht nur Schatten auf dem Hintergrund, sondern auch Aufhellungen durch Reflexionen an der Objektoberfläche, was insbesondere bei spiegelnden Objekten zu berücksichtigen ist.

In einer weiterbildenden Variante der Erfindung von eigener schutzwürdiger Bedeutung ist deshalb vorgesehen, in dem Kompositbild auch die Reflexionen an dem Objekt bzw. der Szene zu berücksichtigen, indem das Kompositbild an den entsprechenden Stellen aufgehellt wird.

Hierzu ermittelt die zweite Recheneinheit für jedes Rasterelement des Kompositbildes in dem durch das Hintergrundbild eingenommenen Bildbereich aus den Farbwerten der korrespondierenden Rasterelemente des Vordergrundbildes einen Korrekturwert, der die von Reflexionen an dem Objekt herrührenden Aufhellungen in dem monochromen Hintergrund wiedergibt.

Dieser Korrekturwert wird nachfolgend der Bildverarbeitungseinheit zugeführt, die das Kompositbild zur Darstellung der Aufhellungen in Abhängigkeit von dem Korrekturwert entsprechend aufhellt. In der bevorzugten Ausführungsform dieser Variante ist eine Eingabeeinheit vorgesehen, die mit der Bildverarbeitungseinheit verbunden ist und die Eingabe eines Steuerfaktors ermöglicht, der das Ausmaß der Aufhellungen im Kompositbild steuert. Auf diese Weise kann der Benutzer in dem Kompositbild steuern, inwieweit die Reflexionen an dem Objekt des Vordergrundbildes in dem Kompositbild reproduziert werden sollen.

In einer Ausführungsform dieser Variante ist vorgesehen, den Korrekturwert, der die von Reflexionen an dem Objekt herrührenden Aufhellungen auf dem monochromen Hintergrund des Vordergrundbildes wiedergibt, in einer Speichermatrix abzuspeichern, wobei jedes Element der Speichermatrix jeweils einem Rasterelement des Kompositbildes zugeordnet ist. Durch eine Bilddarstellung des Inhalts dieser Speichermatrix kann der Benutzer in einfacher Weise einen Überblick über die von Reflexionen an dem Objekt des Vordergrundbildes herrührenden Aufhellungen erhalten, ohne das Kompositbild mit allen Einzelheiten darstellen zu müssen.

Die vorstehend beschriebene Vorrichtung eignet sich vorteilhaft zur Realisierung im Rahmen einer Parallelrechnerarchitektur, da die Farbwerte der einzelnen Rasterelemente des Kompositbildes unabhängig voneinander und damit parallel berechnet werden können.

Die Erfindung ist jedoch nicht auf eine Realisierung im Rahmen eines Mikroprozessorsystems beschränkt, bei dem die vorstehend beschriebenen Operationen programmgesteuert ablaufen, sondern läßt sich auch rein hardwaremäßig realisieren.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung eine Vorrichtung zur Erzeugung eines Kompositbildes aus einem Vordergrundbild und einem Hintergrundbild,
- Figur 2: eine schematische Übersicht über das Arbeitsverfahren der in Figur 1 dargestellten Vorrichtung sowie
- Figur 3a bis 3d: ein weiteres erfindungsgemäßes Verfahren zur Erzeugung eines Kompositbildes aus einem Vordergrund-Bild und einem Hintergrund-Bild als Flußdiagramm.

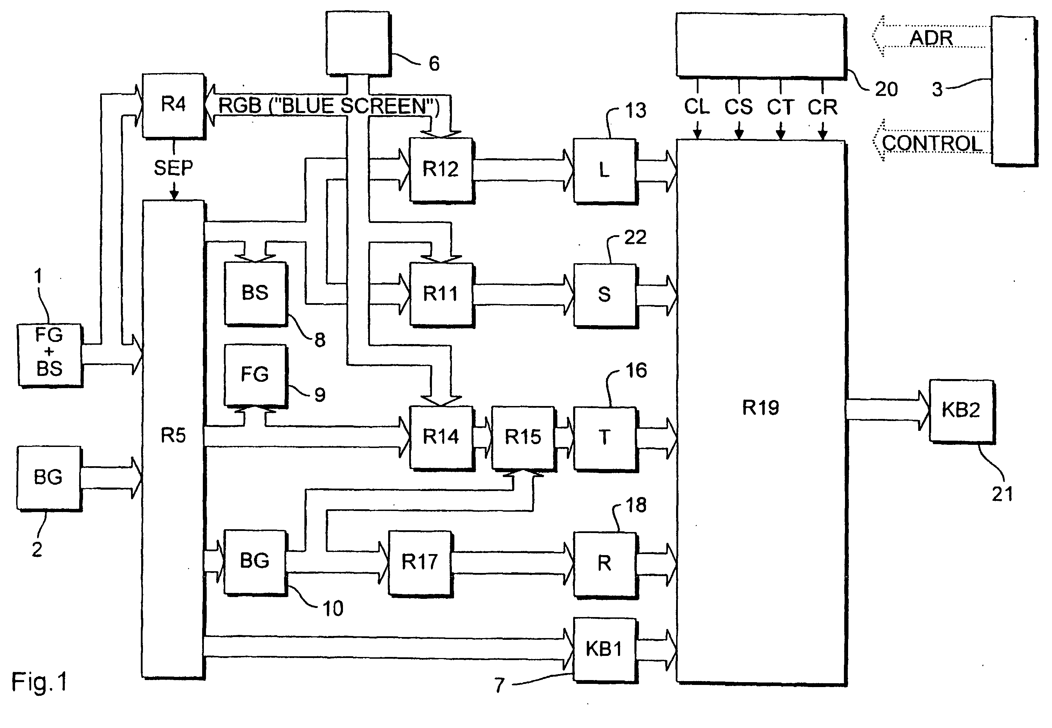

Die in Figur 1 in Form eines Blockschaltbildes dargestellte Vorrichtung dient zum Zusammensetzen eines Vordergrundbildes (FG - engl. foreground) und eines Hintergrundbildes (BG - engl. background) zu einem Kompositbild, wobei das Vordergrundbild ein Objekt darstellt, das in das Hintergrundbild eingeblendet wird.

Voraussetzung hierfür ist, daß das Objekt in dem Vordergrundbild vor einem im wesentlichen monochromen Hintergrund (BS - engl. blue screen) dargestellt ist, um das Objekt einzeln ohne den Rest des Vordergrundbildes in das Hintergrundbild einblenden zu können.

Zur Aufnahme der beiden Bilder weist die Vorrichtung zwei Speichermatrizen 1, 2 auf, wobei jeder Speicherplatz der beiden Speichermatrizen 1, 2 jeweils einem Rasterelement des Vorder- bzw. Hintergrundbildes zugeordnet ist und entsprechend dem RGB-Farbmodell die Intensitäten der drei Grundfarben Rot, Grün und Blau in einem Intervall von 0 bis 255 enthält, so daß die Speichermatrizen 1, 2 ein digitales Abbild des Vorder- bzw. Hintergrundbildes darstellen.

Um das in dem Vordergrundbild dargestellte Objekt in das Hintergrundbild einblenden zu können, muß zunächst für jedes Rasterelement bestimmt werden, ob das Rasterelement einen Teil des Objekts darstellt oder zu dem monochromen Hintergrund gehört.

Hierzu adressiert die Steuereinheit 3 nacheinander sämtliche Speicherplätze der Speichermatrix 1, die daraufhin die Farbwerte der korrespondierenden Rasterelemente des Vordergrundbildes über einen Datenbus zum einen an die Recheneinheit R4 und zum anderen an die Auswahleinheit R5 weiterleitet.

Die Recheneinheit R4 erzeugt für jedes Rasterelement des Vordergrundbildes ein Steuersignal SEP, das die Zugehörigkeit des Rasterelements entweder zu dem Objekt (SEP=1) oder zu dem monochromen Hintergrund (SEP=0) wiedergibt. Hierzu vergleicht die Recheneinheit R4 die über den Datenbus aus der Speichermatrix 1 ausgelesenen Farbwerte jedes Rasterelements mit vorgegebenen Farbwerten, die die Farbzusammensetzung des monochromen Hintergrunds wiedergeben und von dem Benutzer über eine Eingabeeinheit 6 eingestellt werden können. Auf diese Weise ist es vorteilhaft möglich, auch solche Vordergrundbilder zu verwenden, bei denen die Farbzusammensetzung des monochromen Hintergrunds nicht exakt bekannt ist. Der Benutzer stellt dann an der Eingabeeinheit 6 zunächst einen Schätzwert für die Farbzusammensetzung des monochromen Hintergrunds ein und optimiert diesen Schätzwert iterativ, wobei jeweils die optische Qualität der Bildzusammensetzung als Beurteilungsmaßstab dient.

Das von der Recheneinheit R4 erzeugte Steuersignal SEP wird der Auswahleinheit R5 zugeführt, die die Aufgabe hat, in dem Vordergrundbild das Objekt von dem monochromen Hintergrund zu trennen und ein Kompositbild KB1 zusammenzusetzen, das in jedem Rasterelement entweder aus den Farbwerten des korrespondierenden Rasterelements des Vordergrundbildes oder aus den Farbwerten des korrespondierenden Rasterelements des Hintergrundbildes besteht. Zur Zwischenspeicherung des Kompositbildes ist die Auswahleinheit R5 ausgangsseitig mit einer weiteren Speichermatrix 7 verbunden, wobei jeder Speicherplatz der Speichermatrix 7 einem Rasterelement des Kompositbildes zugeordnet ist, so daß die Speichermatrix 7 ein digitales Abbild des Kompositbildes wiedergibt.

Ist das von der Recheneinheit R4 erzeugte Steuersignal SEP=0, so speichert die Auswahleinheit R5 die aus der Speichermatrix 2 ausgelesenen Farbwerte in der Speichermatrix 7 ab, während die aus der Speichermatrix 1 ausgelesenen Farbwerte an die Speichermatrix 7 weitergegeben werden, wenn das Steuersignal SEP=1 ist.

Die Speichermatrix 7 enthält also ein in digitalisierter Form vorliegendes Kompositbild, das in jedem Rasterelement entweder aus dem korrespondierenden Rasterelement des Vordergrundbildes oder aus dem korrespondierenden Rasterelement des Hintergrundbildes zusammengesetzt ist.

Darüber hinaus sind der Auswahleinheit R5 drei weitere Speichermatrizen 8, 9, 10 nachgeschaltet, die eine anschließende optische Überarbeitung des in der Speichermatrix zwischengespeicherten Kompositbildes ermöglichen, um beispielsweise auch Transparenzeffekte nachbilden zu können.

So enthält die Speichermatrix 8 ein digitales Bild des in dem Vordergrundbild enthaltenen monochromen Hintergrundes. Hierzu liest die Auswahleinheit die Farbwerte des korrespondierenden Rasterelements des Vordergrundbildes aus der Speichermatrix 1 aus und schreibt diese Farbwerte in den entsprechenden Speicherplatz der Speichermatrix 8, falls das Steuersignal SEP anzeigt, daß dieses Rasterelement aufgrund seiner Farbzusammensetzung zum monochromen Hintergrund gehört. Gehört das Rasterelement des Vordergrundbildes dagegen zu dem Objekt, das vor dem monochromen Hintergrund dargestellt wird, so setzt die Auswahleinheit die Farbwerte in dem Rasterelement der Speichermatrix 8 auf Null, so daß das in der Speichermatrix 8 abgespeicherte Bild in diesem Bereich schwarz ist.

Das auf diese Weise erzeugte Bild des monochromen Hintergrunds ermöglicht eine Nachbildung der Schatten und Aufhellungen, die das Objekt bei der Aufnahme des Vordergrundbildes auf dem monochromen Hintergrund verursacht. So wirft ein Körper bei der Aufnahme vor einem monochromen Hintergrund in der Regel einen Schatten auf den monochromen Hintergrund, der in dem Kompositbild entsprechend dargestellt werden sollte. In gleicher Weise verursachen Reflexionen an der Objektoberfläche Aufhellungen auf dem monochromen Hintergrund, die auch in dem Kompositbild als Aufhellungen in dem neuen Hintergrundbild wiedergegeben werden sollten.

Der Speichermatrix 8 ist deshalb eine Recheneinheit R11 nachgeschaltet, die die Rufgabe hat, die Farbzusammensetzung jedes Rasterelements des aus dem Vordergrundbild "ausgeschnittenen" und in der Speichermatrix 8 abgespeicherten monochromen Hintergrundes mit der Farbzusammensetzung zu vergleichen, die von dem Benutzer über die Eingabeeinheit 6 eingestellt wurde und den Richtwert für die Farbzusammensetzung des monochromen Hintergrunds darstellt. Auf diese Weise kann die Recheneinheit R11 lokale Änderungen der Farbzusammensetzung oder Abdunkelungen erkennen, die von einer Schattenbildung des vor dem monochromen Hintergrund aufgenommenen Objekts herrühren. Die Recheneinheit R11 berechnet deshalb für jedes Rasterelement des von dem monochromen Hintergrund eingenommenen Bildbereichs einen Korrekturwert, der angibt, wie stark die Schattenbildung in diesem Rasterelement ist und speichert diese Korrekturwerte in der Speichermatrix 22 ab, die somit eine Berücksichtigung der Schattenbildung in dem Kompositbild ermöglicht.

Während die vorstehend beschriebene Recheneinheit R11 die Aufgabe hat, die Schattenbildung des Objekts auf dem monochromen Hintergrund zu berücksichtigen, ermöglicht die Recheneinheit R12 die Nachbildung der Reflexionen an dem Objekt, die zu lokalen Aufhellungen oder Änderungen der Farbzusammensetzung im Bereich des monochromen Hintergrund führen. Hierzu vergleicht die Recheneinheit R12 die Farbwerte des aus dem Vordergrundbild "ausgeschnittenen" monochromen Hintergrunds mit den vorgegeben Richtwerten für die Farbzusammensetzung des monochromen Hintergrunds, die der Benutzer zuvor über die Eingabeeinheit 6 eingestellt hat. Die Recheneinheit R12 ermittelt dann für jedes Rasterelement Korrekturwerte, der die Änderung der Farbwerte dieses Rasterelements durch die Reflexionen an dem Objekt wiedergeben und speichert diese Korrekturwerte als digitales Bild in der Speichermatrix 13 ab.

Darüber hinaus ermöglicht die dargestellte Vorrichtung auch die Nachbildung von Transparenzeffekten durch nachträgliche Bildverarbeitung des in der Speichermatrix zwischengespeicherten Kompositbildes. Hierzu isoliert die Auswahleinheit R5 aus dem Vordergrundbild den von dem Objekt eingenommenen Bildbereich und speichert diesen in der Speichermatrix 9 ab.

Anschließend vergleicht die Recheneinheit R14 die Farbzusammensetzung innerhalb des von dem Objekt eingenommenen Bildbereichs mit den von dem Benutzer über die Eingabeeinheit 6 eingegebenen Richtwerten für die Farbzusammensetzung des monochromen Hintergrunds, um solche Rasterelemente zu ermitteln, in denen das in dem Vordergrundbild dargestellte Objekt transparent ist, so daß der moncchrome Hintergrund durch das Objekt hindurchscheint, was an der Änderung der Farbzusammensetzung in diesem Rasterelement erkennbar ist. Die Recheneinheit R14 ermittelt hierbei für jedes Rasterelement des Vordergrundbildes in dem durch das Objekt eingenommenen Bildbereich einen Transparenzwert, der die Durchsichtigkeit des Objekts in diesem Rasterelement wiedergibt. Der auf diese Weise ermittelte Transparenzwert wird nachfolgend einer Bildverarbeitungseinheit R15 zugeführt, die für jedes Rasterelement die Änderungen der Farbwerte berechnet, die aus der Transparenz des Objekts resultieren.

Zum einen korrigiert die Bildverarbeitungseinheit R15 in dem Vordergrundbild die Farbverfälschung, die von dem durch das Objekt hindurchscheinenden monochromen Hintergrund herrührt. Zum anderen berücksichtigt die Bildverarbeitungseinheit R15 die Bildwirkung des durch das Objekt hindurchscheinenden neuen Hintergrundbildes.

Hierzu berechnet die Bildverarbeitungseinheit R15 für jedes Rasterelement des Kompositbildes Korrekturwerte, die die Anderung der Farbwerte durch die Transparenzeffekte wiedergeben.

Weiterhin ermöglicht die Vorrichtung die Berücksichtigung der Beeinflussung des subjektiven Farbempfindens durch das neue Hintergrundbild. Ist das neue Hintergrundbild beispielsweise stark rötlich, so wirkt das in dem Vordergrundbild enthaltene Objekt bei einer unveränderten Farbwiedergabe in dem Kompositbild unnatürlich. Zur Erreichung eines natürlichen Farbempfindens ist es deshalb erforderlich, die Farbwerte des Kompositbildes in dem durch das Objekt eingenommenen Bildbereich an die Farbwerte des neuen Hintergrundbildes anzupassen.

Hierzu ist eine Recheneinheit R17 vorgesehen, die eingangsseitig mit der Speichermatrix 10 verbunden ist und das neue Hintergrundbild zunächst in eine Vielzahl von Teilbereichen aufteilt und für jeden Teilbereich die Durchschnittswerte der einzelnen Farbkomponenten berechnet. Anschließend ermittelt die Recheneinheit R17 für jedes Rasterelement Korrekturwerte für die drei Grundfarben Rot, Grün und Blau, die die Farbänderung des Objekt bestimmt, die zur Erreichung eines natürlichen Farbeindrucks erforderlich ist. Hierzu betrachtet die Recheneinheit R17 zunächst den Einfluß der einzelnen Teilbereiche einzeln und berechnet für jeden Teilbereich einen Korrekturwert, der von dem Abstand zwischen dem betrachteten Rasterelement und dem jeweiligen Teilbereich abhängig ist. Ist ein Teilbereich beispielsweise relativ weit entfernt von einem Rasterelement des Objekts, so hat dieser Teilbereich einen wesentlich geringeren Einfluß auf das Farbempfinden dieses Rasterelements als ein unmittelbar benachbarter Teilbereich. Die Recheneinheit R17 summiert dann für jedes Rasterelement die für die einzelnen Teilbereiche ermittelten Korrekturwerte zu einem einzigen Korrekturwert auf, der angibt, wie die Farbwerte dieses Rasterelements zu verändern sind, um vor dem neuen Hintergrundbild einen natürlichen Farbeindruck zu erhalten. Diese Korrekturwerte werden dann in die Speichermatrix 18 geschrieben.

Die Vorrichtung berechnet also aus Vorder- und Hintergrundbild den Inhalt von vier Speichermatrizen 13, 16, 18, 22 die für die einzelnen Rasterelemente des Kompositbildes Korrekturwerte für die drei Grundfarben Rot, Grün und Blau enthalten, um Transparenzeffekte, Aufhellungen und Schatten sowie die Farbbeeinflussung durch den neuen Hintergrund berücksichtigen zu können.

Hierzu weist die dargestellte Vorrichtung eine Bildverarbeitungseinheit R19 auf, die eingangsseitig zum einen mit der das Kompositbild enthaltenden Speichermatrix 7 und zum anderen mit den Speichermatrizen 13, 16, 18, 22 verbunden ist, welche die Korrekturwerte enthalten. Die Bildverarbeitungseinheit R19 berechnet dann für jedes Rasterelement des Kompositbildes KB1 aus den in der Speichermatrix 7 abgespeicherten Farbwerten dieses Rasterelements einerseits und den verschiedenen Korrekturwerten andererseits die Farbwerte eines neuen Bildes KB2, das in der nachgeschalteten Speichermatrix 21 abgespeichert wird.

Die Bildverarbeitungseinheit R19 ermöglicht hierbei eine stufenlose Einstellung der Intensität der verschiedenen vorstehend beschriebenen Effekte und weist hierzu eine Eingabeeinheit 20 auf, über die der Benutzer mehrere Steuerparameter CL, CS, CT, CR einstellen kann, die zur Gewichtung der in den Speichermatrizen 13, 16, 18, 22 enthaltenen Korrekturwerte dienen, was beispielsweise eine stufenlose Einstellung der Schattenbildung in dem resultierenden Bild ermöglicht.

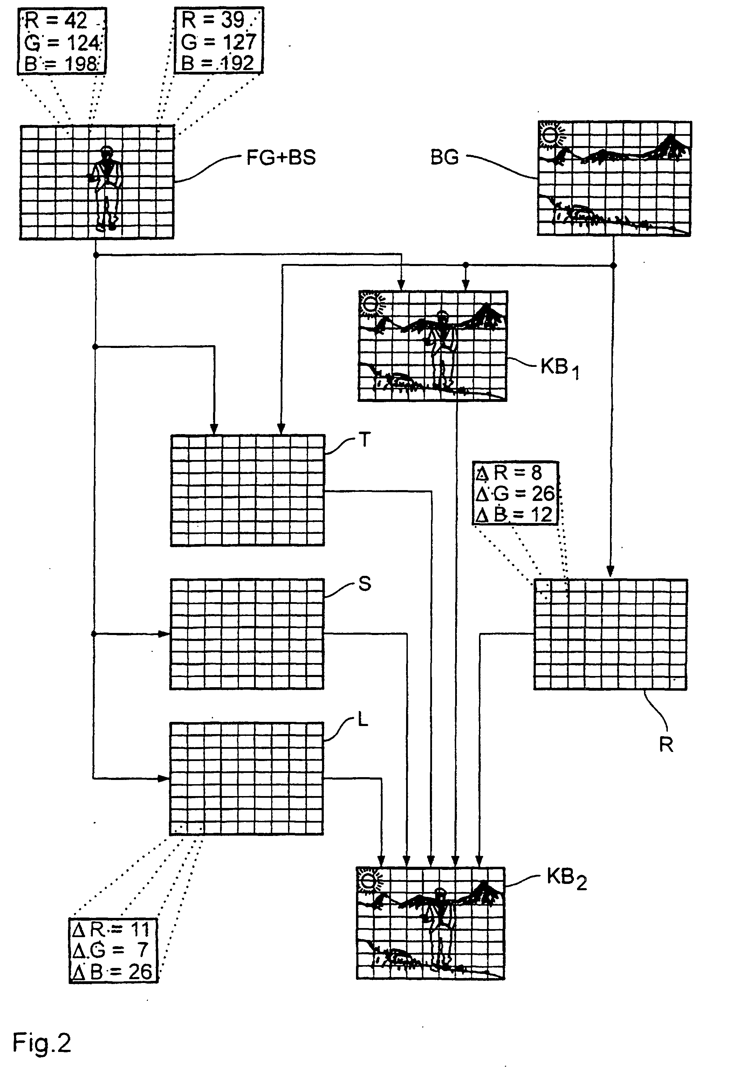

Das Arbeitsverfahren der vorstehend beschriebenen Vorrichtung wird durch das in Figur 2 dargestellte Diagramm weiter verdeutlicht.

Zunächst berechnet die Vorrichtung aus dem Vordergrundbild FG und dem Hintergrundbild BG das Kompositbild KB₁, das sich in jedem Rasterelement entweder aus den Farbwerten des korrespondierenden Rasterelements des Vordergrundbildes FG oder aus den Farbwerten des korrespondierenden Rasterelements des Hintergrundbildes BG zusammensetzt.

Weiterhin berechnet die Vorrichtung vier Speichermatrizen T, S, L, R, die für jedes Rasterelement des Kompositbildes KB₁ Korrekturwerte für die drei Grundfarben Rot, Grün und Blau enthalten und die Berechnung eine Kompositbildes mit einem natürlichen Bildeindruck ermöglichen.

Die in der Speichermatrix T abgespeicherten Korrekturwerte geben hierbei die Änderungen der Farbwerte des Kompositbildes wieder, die sich daraus ergeben, daß das in dem Vordergrundbild enthaltene Objekt transparent ist, so daß das Hintergrundbild BG auch in dem diesem Bereich teilweise sichtbar ist.

Die Speichermatrix S definiert dagegen die Änderungen der Farbwerte des Kompositbildes, die erforderlich sind, um die Schattenbildung des Objekts auf dem monochromen Hintergrund des Vordergrundbildes auch im Kompositbild auf dem neuen Hintergrund nachbilden zu können.

Entsprechend ermöglicht die Speichermatrix L die Reproduktion der auf dem monochromen Hintergrund des Vordergrundbildes FG sichtbaren Aufhellungen, die von Reflexionen an dem Objekt herrühren.

Die Speichermatrix R dient dagegen zur Anpassung des Farbeindruck des Objekts in dem Kompositbild an den neuen Hintergrund, damit das Objekt beispielsweise vor einem stark rötlichen Hintergrund nicht unnatürlich wirkt.

Der Inhalt der vorstehend genannten Speichermatrizen ermöglicht zusammen mit dem vorläufigen Kompositbild KB₁ die Berechnung des endgültigen Kompositbildes KB₂, das dem Betrachter einen natürlichen Bildeindruck vermittelt.

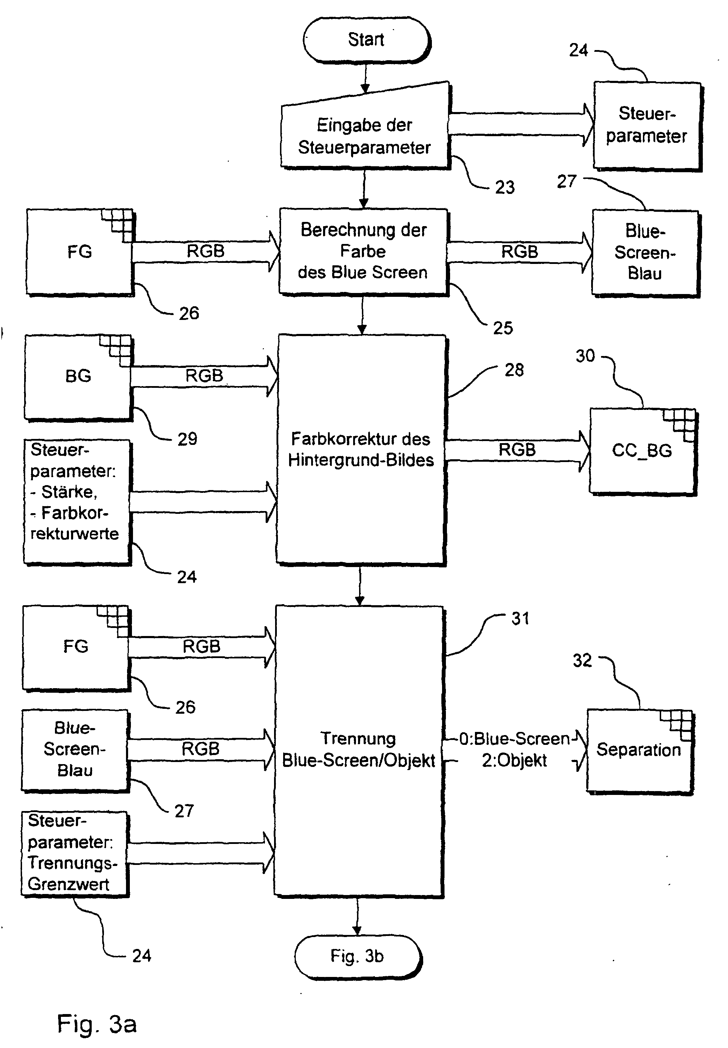

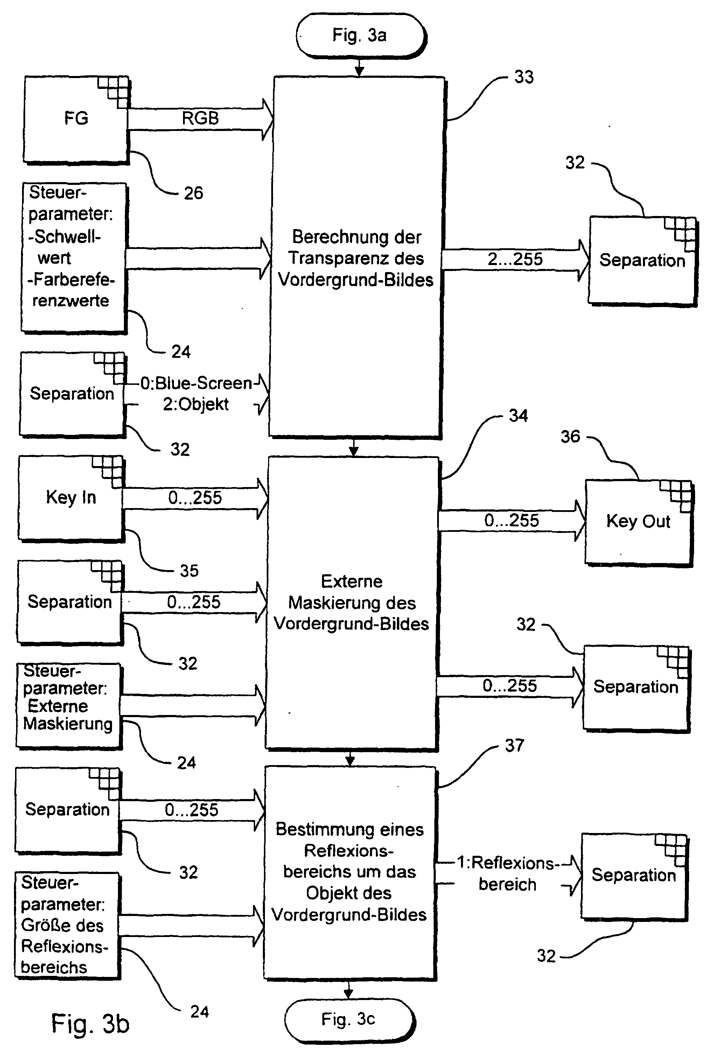

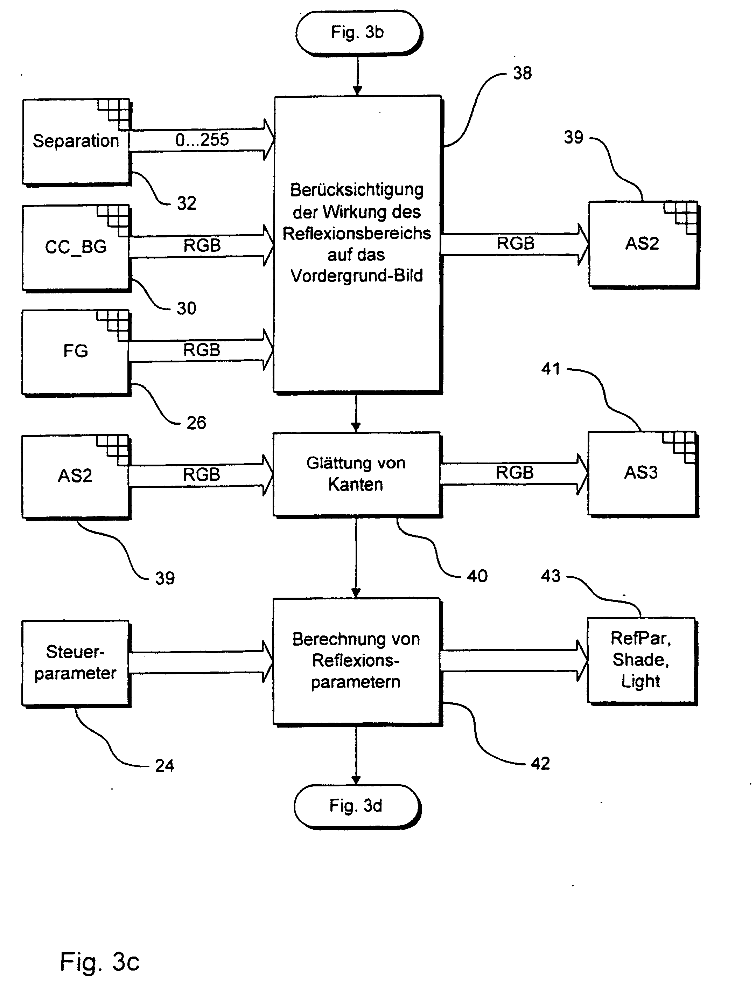

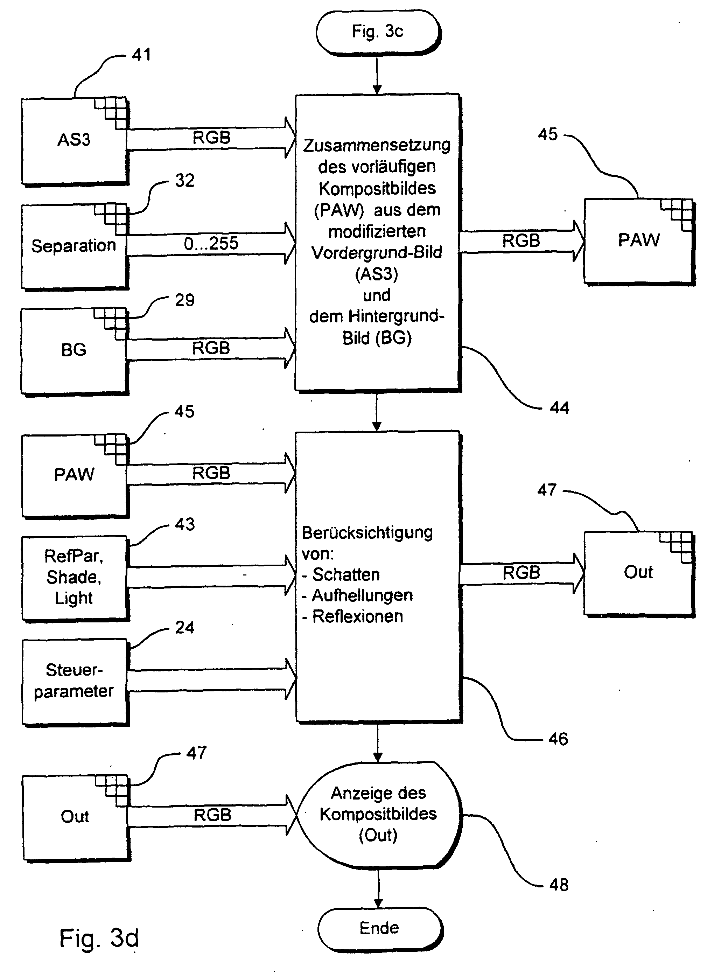

Die Figuren 3a bis 3d zeigen ein weiteres derartiges Matting-Verfahren als Flußdiagramm, wobei in der Mitte jeweils die einzelnen Verfahrensschritte dargestellt sind, während die für den jeweiligen Verfahrensschritt erforderlichen Eingangsdaten auf der linken Seite und die resultierenden Ausgangsdaten auf der rechten Seite wiedergegeben sind. Die beidseitig der Verfahrensschritte gezeigten Blöcke geben jeweils Speicherelemente einer entsprechenden Vorrichtung wieder, welche die Eingangs- bzw. Ausgangsdaten für die jeweiligen Verfahrensschritte aufnehmen, wobei einige der Speicherelemente als Speichermatrizen ausgeführt sind, was in den zugehörigen Blöcken durch die Andeutung einer Rasterung in der rechten oberen Ecke erkennbar ist. Diese Speicherelemente enthalten somit eine Vielzahl von Speicherplätzen, die jeweils einem Rasterelement des Bildbereichs zugeordnet sind und beispielsweise die Intensität der drei Grundfarben Rot, Grün und Blau bestimmen.

Im ersten Verfahrensschritt 23 gibt der Benutzer zunächst über eine Eingabeeinheit Steuerparameter ein, die das Matting-Verfahren steuern und beispielsweise angeben, in welchem Maße Transparenzeffekte in dem resultierenden Kompositbild berücksichtigt werden. Diese Steuerparameter werden in einem Speicherelement 24 festgehalten und im Rahmen der nachfolgend beschriebenen weiteren Verfahrensschritte nach Bedarf abgerufen.

Im nächsten Verfahrensschritt 25 wird dann zunächst die Farbzusammensetzung des blauen Hintergrunds ("Blue-Screen") in dem Vordergrundbild (FG - engl. foreground) berechnet, um später das Objekt bzw. die Szene in dem Vordergrund-Bild von dem blauen Hintergrund separieren zu können. Hierzu werden die Farbkomponenten der drei Grundfarben Rot, Grün und Blau für alle Rasterelemente des Vordergrund-Bildes aus einer Speichermatrix 26 ausgelesen, die das Vordergrund-Bild in digitalisierter Form enthält. Anschließend wird dann für sämtliche Rasterelemente des Vordergrund-Bildes die Intensität der blauen Farbkomponente mit der Intensität der beiden anderen Farbkomponenten verglichen, um die Rasterelemente des Vordergrund-Bildes zu bestimmen, in denen die blaue Farbkomponente vorherrschend ist und die somit vermutlich zu dem blauen Hintergrund gehören und nicht zu einem im Vordergrund-Bild dargestellten Objekt. Für die auf diese Weise ermittelten Rasterelemente wird dann der Durchschnittswert der drei Farbkomponenten Rot, Grün und Blau berechnet und in einem Speicherelement 27 als Vergleichswert für die spätere Separierung abgespeichert. Diese automatische Bestimmung der Farbzusammensetzung des blauen Hintergrunds ermöglicht vorteilhaft auch die Verwendung von Vordergrund-Bildern mit einer unbekannten Farbzusammensetzung des blauen Hintergrunds. Darüber hinaus kann die Farbzusammensetzung des blauen Hintergrunds hierbei in relativ weiten Grenzen schwanken, ohne die Funktion zu beeinträchtigen, so daß beispielsweise Ausbleichungen einer bestehenden Blue-Screen-Kulisse nur geringfügige Auswirkunger auf das resultierende Kompositbild haben.

Im nächsten Verfahrensschritt 28 wird dann eine Farbkorrektur des Hintergrund-Bildes (BG - engl. background) entsprechend den zuvor eingegebenen und in dem Speicherelement 24 festgehaltenen Steuerparametern durchgeführt. Hierzu wird zunächst die Intensität der drei Farbkomponenten Rot, Grün und Blau nacheinander für sämtliche Rasterelemente des Hintergrund-Bildes aus einer Speichermatrix 29 ausgelesen, die das Hintergrund-Bild in digitalisierter Form enthält.

Die Farbkorrektur des Hintergrund-Bildes umfaßt zum einen die Einstellung der Helligkeit unter Beibehaltung des Farbeindrucks, indem die Intensität der drei Farbkomponenten in den einzelnen Rasterelementen gleichmäßig erhöht oder herabgesetzt wird, wobei das Ausmaß der Aufhellung bzw. Abdunkelung durch den Steuerparameter "Helligkeit" vorgegeben wird. Wichtig ist hierbei, daß die Aufhellung bzw. Abdunkelung einheitlich für alle Rasterelemente des Hintergrund-Bildes erfolgt.

Zum anderen umfaßt die Farbkorrektur des Hintergrund-Bildes auch die Anderung der Farbzusammensetzung der einzelnen Rasterelemente, um einen anderen Farbeindruck des Hintergrund-Bildes zu erreichen. Hierzu enthalten die in dem Speicherelement 24 abgespeicherten Steuerparameter drei Farbkorekturwerte für die drei Farbkomponenten Rot, Grün und Blau. Die Farbzusammensetzung des Hintergrund-Bildes wird dann in jedem Rasterelement entsprechend den Farbkorrekturwerten verändert, wobei zu bemerken ist, daß die Änderung der Farbzusammensetzung einheitlich für das gesamte Hintergrund-Bild erfolgt.

Die aus der Farbkorrektur für die einzelnen Rasterelemente resultierenden Intensitätswerte für die drei Farbkomponenten Rot, Grün und Blau werden dann in eine weitere Speichermatrix 30 geschrieben, die somit das modifizierte Hintergrund-Bild (engl. CC_BG - colour corrected background image) enthält.

Im nächsten Verfahrensschritt 31 erfolgt dann die Separierung des blauen Hintergrunds von den Objekten im Vordergrund-Bild individuell für jedes Rasterelement des Vordergrund-Bildes. Hierzu werden für jedes Rasterelement des Vordergrund-Bildes die Intensitätswerte der drei Farbkomponenten aus der Speichermatrix 26 ausgelesen und mit der zuvor ermittelten Farbzusammensetzung des blauen Hintergrunds verglichen, die in dem Speicherelement 27 abgespeichert ist. Der Vergleich der Farbzusammensetzung des blauen Hintergrunds mit der Farbzusammensetzung der einzelnen Rasterelemente des Vordergrund-Bildes erfolgt hierbei unter Berücksichtigung des zuvor im ersten Verfahrensschritt 23 eingegebenen Steuerparameters "Trennungs-Grenzwert", der zur Optimierung des optischen Eindrucks insbesondere zur Anpassung an schwierige Bildinhalte vom Benutzer variiert werden kann. Im Rahmen dieses Vergleichs wird dann in Abhängigkeit von der Zugehörigkeit des jeweiligen Rasterelements zum blauen Hintergrund oder zu einem Objekt des Vordergrund-Bildes ein Schlüsselwert berechnet und in einer Speichermatrix 32 abgespeichert, wobei jeder Speicherplatz der Speichermatrix 32 einem Rasterelement des Vordergrund-Bildes zugeordnet ist. So wird bei einer Zugehörigkeit eines Rasterelements des Vordergrund-Bildes zum blauen Hintergrund eine "0" als Schlüsselwert in den zugehörigen Speicherplatz der Speichermatrix 32 eingespeichert, wohingegen eine Zugehörigkeit eines Rasterelements zu einem Objekt des Vordergrund-Bildes zur Speicherung einer "2" als Schlüsselwert führt. Die Speichermatrix 32 gibt also nach der vorstehend beschriebenen Separierung die Zugehörigkeit der einzelnen Rasterelemente des Vordergrund-Bildes entweder zu dem blauen Hintergrund oder zu einem Objekt des Vordergrund-Bildes wieder.

Im nächsten Verfahrensschritt 33 wird dann individuell für jedes Rasterelement die Lichtdurchlässigkeit der Objekte des Vordergrund-Bildes ermittelt, die sich in einem Durchscheinen des blauen Hintergrunds äußert. Dies ermöglicht eine Optimierung des Bildeindrucks des resultierenden Kompositbildes, indem die Lichtdurchlässigkeit der Objekte des Vordergrund-Bildes bei der Einblendung in das neue Hintergrund-Bild dadurch nachgebildet wird, daß der neue Hintergrund im resultierenden Kompositbild durch die aus dem Vordergrund-Bild separierten Objekte hindurchscheint.

Zur Einsparung von Rechenzeit erfolgt diese Transparenzberechnung nur für solche Rasterelemente des Vordergrund-Bildes, die nicht zu dem blauen Hintergrund, sondern zu einem Objekt des Vordergrundbildes gehören, was sich aus den in der Speichermatrix 32 gespeicherten Schlüsselwerten ergibt.

Für die Bestimmung der Lichtdurchlässigkeit der einzelnen Objekte des Vordergrund-Bildes werden die Intensitätswerte der drei Farbkomponenten für jedes Rasterelement aus der Speichermatrix 26 ausgelesen und unter Berücksichtigung eines als Steuerparameter aus dem Speicherelement 24 ausgelesenen Schwellwerts mit drei Farbreferenzwerten verglichen, die ebenfalls im ersten Verfahrensschritt 23 vom Benutzer eingegeben wurden und im Speicherelement 24 festgehalten sind. Im Rahmen dieses Vergleichs wird dann individuell für jedes Rasterelement ein Transparenzwert im Bereich zwischen 2 und 255 berechnet und in dem zugehörigen Speicherplatz der Speichermatrix 32 gespeichert, wobei der Transparenzwert 2 bedeutet, daß das Objekt in diesem Rasterelement vollkommen undurchsichtig ist, wohingegen ein Transparenzwert von 255 bei einem fast durchsichtigen Objekt auftritt. Nach diesem Verfahrensschritt 33 gibt die Speichermatrix 32 also nicht nur die Zugehörigkeit der einzelnen Rasterelemente entweder zu dem blauen Hintergrund oder einem Objekt wieder, sondern bestimmt zusätzlich in den zu einem Objekt gehörenden Rasterelementen auch noch die Lichtdurchlässigkeit des jeweiligen Rasterelements.

In einem weiteren Verfahrensschritt 34 erfolgt dann eine Maskierung des Bildinhalts, um beispielsweise bestimmte Objekte in dem Vordergrund-Bild im Kompositbild auszublenden. Hierzu werden die in der Speichermatrix 32 abgespeicherten Schlüsselwerte für die einzelnen Rasterelemente entsprechend der gewünschten Bildmaskierung verändert, wobei die Bildmaskierung durch entsprechende Schlüsselwerte ("Key In") in einer weiteren Speichermatrix 35 vorgegeben wird. Jeder Speicherplatz dieser Speichermatrix 35 ist jeweils einem Rasterelement des Bildinhalts zugeordnet und enthält einen Schlüsselwert, der angibt, ob ein Objekt des Vordergrund-Bildes in diesem Rasterelement auch im Kompositbild erscheinen soll oder nicht. Darüber hinaus wird in diesem Verfahrensschritt 34 ein Satz von Schlüsselwerten ("Key Out") für die einzelnen Rasterelemente berechnet, indem die in der Speichermatrix 32 abgespeicherten Schlüsselwerte mit den durch die Speichermatrix 35 vorgegebenen externen Schlüsselwerten ("Key In") verknüpft werden, wobei die Art der Verknüpfung (z.B. Addition oder Subtraktion) durch den Steuerparameter "Externe Maskierung" vorgegeben wird, der im ersten Verfahrensschritt 23 eingegeben wurde und in dem Speicherelement 24 abgespeichert ist. Die auf diese Weise berechneten Schlüsselwerte ("Key Out") werden dann in einer weiteren Speichermatrix 36 abgespeichert.

Im nächsten Verfahrensschritt 37 wird dann ein sogenannter Reflexionsbereich bestimmt, der die Objekte in dem Vordergrund-Bild umgibt, wobei die Größe der Reflexionsbereiche durch den Steuerparameter "Größe des Reflexionsbereichs" bestimmt wird, der in dem Speicherelement 24 abgespeichert ist und zuvor vom Benutzer eingegeben wurde. Dieser Steuerparameter bestimmt die Breite des Reflexionsbereichs durch Angabe einer bestimmten Zahl von Rasterelementen. Zur Bestimmung der Reflexionsbereiche ist es zunächst erforderlich, die Übergänge zwischen den Objekten und dem blauen Hintergrund im Vordergrund-Bild zu ermitteln, wozu die in der Speichermatrix 32 abgespeicherten Schlüsselwerte für die einzelnen Rasterelemente ausgelesen werden. Für jedes Rasterelement innerhalb der Reflexionsbereiche wird dann der in der Speichermatrix 32 abgespeicherte Schlüsselwert auf den Wert "1" gesetzt, um die Zugehörigkeit des jeweiligen Rasterelements zu einem Reflexionsbereich zu kennzeichnen.

In einem nächsten Verfahrensschritt 38 wird dann der Einfluß der in den Reflexionsbereichen gelegenen Rasterelemente des Hintergrund-Bildes auf die jeweiligen Objekte des Vordergrund-Bildes berechnet. Hierbei wird von der Erkenntnis ausgegangen, daß ein Objekt bei einer farblich unveränderten Einblendung in einen beispielsweise stark rötlichen Hintergrund unnatürlich wirkt, so daß es vorteilhaft ist, die Farbzusammensetzung der einzelnen Rasterelemente der in das Hintergrund-Bild eingeblendeten Objekte des Vordergrund-Bilds entsprechend der Farbzusammensetzung der in den jeweiligen Reflexionsbereichen gelegenen Rasterelemente zu verändern, um eine möglichst natürliche Bildwirkung zu erreichen. Hierzu wird der Bildbereich in eine Vielzahl von Rechtecken aufgeteilt und für jedes Rechteck jeweils ein Mittelwert der Farbzusammensetzung für die Rasterelemente ermittelt, die zu einem Objekt des Vordergrund-Bildes oder einem Reflexionsbereich gehören. Für jedes zu einem Objekt des Vordergrund-Bildes oder einem Reflexionsbereich gehörende Rasterelement wird dann unter Berücksichtigung einer etwaigen Transparenz ein Farbwert berechnet. Diese Schritte werden dann mehrfach durchgeführt, wobei die Größe der Rechtecke jeweils halbiert wird, bis eine vorgegebene minimale Größe unteschritten wird. Als Ergebnis entsteht dann ein modifiziertes Vordergrund-Bild ("AS2"), das die Farbwirkung des Hintergrund-Bildes berücksichtigt und zur weiteren Verarbeitung in einer Speichermatrix 39 abgespeichert wird.

Im nächsten Verfahrensschritt 40 erfolgt dann eine Kantenglättung in diesem modifizierten Vordergrund-Bild ("AS2"), indem für die einzelnen Rasterelemente jeweils eine Mittelwertbildung über die umgebenden Rasterelemente durchgeführt wird. Das resultierende Bild ("AS3") wird dann in einer weiteren Speichermatrix 41 festgehalten.

Zur Vorbereitung der endgültigen Zusammensetzung des Kompositbildes werden in einem weiteren Verfahrensschritt 42 mehrere Überblendparameter berechnet und in einem Speicherelement 43 abgespeichert, wobei die Berechnung in Abhängigkeit von den im ersten Verfahrensschritt 23 eingegebenen und im-Speicherelement 24 festgehaltenen Steuerparametern erfolgt.

Die Zusammensetzung des Kompositbildes erfolgt dann im nächsten Verfahrensschritt 44 aus dem modifizierten Vordergrund-Bild ("AS3") und dem Hintergrund-Bild ("BG") entsprechend den in der Speichermatrix 32 abgespeicherten Schlüsselwerten. Auf diese Weise entsteht zunächst ein vorläufiges Kompositbild ("PAW"), das in einer Speichermatrix 45 zwischengespeichert wird und nachfolgend weiter bearbeitet wird, um beispielsweise Transparenzeffekte nachzubilden.

Hierzu ist ein weiterer Verfahrensschritt 46 vorgesehen, der die Farbzusammensetzung in den einzelnen Rasterelementen des vorläufigen Kompositbildes individuell für jedes Rasterelement entsprechend den in dem Speicherelement 43 abgespeicherten Überblendparametern und den in dem Speicherelement 24 festgehaltenen Steuergrößen modifiziert. Das resultierende Kompositbild ("Out") wird dann in einer weiteren Speichermatrix 47 abgespeichert und schließlich in einem letzten Verfahrensschritt 48 über eine Anzeigeeinheit ausgegeben.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Insbesondere ist die beschriebene Lösung sowohl in Software- als auch in Hardwareimplementierung günstig anwendbar. Bei einer softwaregesteuerten Lösung wird ein vorhandener Prozessor innerhalb eines Computersystems benutzt, dem die betreffende Software als Steuerprogramm vorgegeben wird, während in einer hardwaremäßigen Lösung die benötigte Funktionalität durch die unmittelbare Verschaltung von logischen Baugruppen erbracht wird. Darüberhinaus können auch Mischformen dieser beiden Lösungswege günstig sein.

## Patentansprüche

1. Vorrichtung zur Erzeugung eines Kompositbildes aus einem Vordergrundbild (FG), welches ein Objekt oder eine Szene vor einem im wesentlichen monochromen Hintergrund wiedergibt und einem Hintergrundbild (BG), mit
einer ersten Recheneinheit (R4) zur Erzeugung eines die Zugehörigkeit jeweils eines Rasterelements des Vordergrundbildes (FG) entweder zu dem Objekt oder zu dem monochromem Hintergrund kennzeichnenden Steuersignals (SEP) für jedes Rasterelement des Vordergrundbildes (FG) in Abhängigkeit von den Farbwerten des Rasterelements einerseits und die Farbzusammensetzung des monochromen Hintergrunds wiedergebenden vorgegebenen Farbwerten andererseits sowie
einer eingangsseitig mit der ersten Recheneinheit (R4) verbundenen Auswahleinheit (R5) zur Berechnung der Farbwerte jeweils eines Rasterelements des Kompositbildes in Abhängigkeit von dem Steuersignal (SEP) entweder aus den Farbwerten des korrespondierenden Rasterelements des Vordergrundbildes (FG) oder aus den Farbwerten des korrespondierenden Rasterelements des Hintergrundbildes (BG),
**gekennzeichnet durch**
eine zweite Recheneinheit (R11, R12, R14, R17) zur Berechnung von Korrekturwerten für die Farbwerte jeweils eines Rasterelements des Kompositbildes in Abhängigkeit von den Farbwerten des korrespondierenden Rasterelements des Vordergrundbildes (FG) und/oder des Hintergrundbildes (BG) zur Erreichung einer natürlichen Bildwirkung,
eine eingangsseitig mit der zweiten Recheneinheit (R11, R12, R14, R17) verbundene Bildverarbeitungseinheit (R19) zur Änderung der Farbwerte jeweils eines Rasterelements des Kompositbildes entsprechend den von der zweiten Recheneinheit (R11, R12, R14, R17) für dieses Rasterelement berechneten Korrekturwerten.

2. Vorrichtung nach Anspruch 1, **dadurch gekennzeichnet, daß** die erste Recheneinheit (R4) zur Einstellung der die Farbzusammensetzung des monochromen Hintergrunds im Vordergrundbild (FG) wiedergebenden vorgegebenen Farbwerte mit einer ersten Eingabeeinheit (6) verbunden ist.

3. Vorrichtung nach Anspruch 1 oder 2, **gekennzeichnet durch** einen Eingang zur Aufnahme der Farbwerte jeweils eines Rasterelements des Vordergrundbildes (FG) und des Hintergrundbildes (BG) sowie einen Ausgang zur Ausgabe der Farbwerte des korrespondierenden Rasterelements des Kompositbildes (KB₂).

4. Vorrichtung nach Anspruch 1 oder 2, **gekennzeichnet durch**
einen Eingang zur Aufnahme eines das Vordergrundbild (FG) repräsentierenden ersten Datensatzes, dessen Elemente die Farbwerte jeweils eines Rasterelements des Vordergrundbildes (FG) enthalten und eines das Hintergrundbild (BG) repräsentierenden zweiten Datensatzes, dessen Elemente die Farbwerte jeweils eines Rasterelements des Hintergrundbildes (BG) enthält,
einen Ausgang zur Ausgabe eines das Kompositbild (KB₂) repräsentierenden dritten Datensatzes, dessen Elemente die Farbwerte jeweils eines Rasterelements des Kompositbildes (KB₂) enthalten.

5. Vorrichtung nach Anspruch 4, **gekennzeichnet durch** eine erste Speichermatrix (1) zur Speicherung des ersten Datensatzes und/oder eine zweite Speichermatrix (2) zur Speicherung des zweiten Datensatzes und/oder eine dritte Speichermatrix (21) zur Speicherung des dritten Datensatzes.

6. Vorrichtung nach Anspruch 5, **gekennzeichnet durch** eine eingangsseitig mit der ersten Speichermatrix und ausgangsseitig mit der ersten Recheneinheit (R4) verbundene dritte Recheneinheit zur Berechnung der den monochromen Hintergrund des Vordergrundbildes (FG) kennzeichnenden vorgegebenen Farbwerte als Durchschnittswert der Farbwerte des Vordergrundbildes (FG).

7. Vorrichtung nach Anspruch 5 oder 6, **dadurch gekennzeichnet, daß** die zweite Recheneinheit (R11, R12, R14, R17) ausgangsseitig zur Speicherung eines vierten Datensatzes mit einer vierten Speichermatrix (18) verbunden ist, wobei jedes Element des vierten Datensatzes die von der zweiten Recheneinheit (R11, R12, R14, R17) berechneten Korrekturwerte für jeweils ein Rasterelement des Kompositbildes enthält.

8. Vorrichtung nach einem der vorhergehenden Ansprüche, **gekennzeichnet durch** eine ausgangsseitig mit der Bildverarbeitungseinheit (R19) verbundene zweite Eingabeeinheit (20) zur Eingabe von Gewichtungsfaktoren für die von der zweiten Recheneinheit (R11, R12, R14, R17) berechneten Korrekturwerte.

9. Vorrichtung nach einem der vorhergehenden Ansprüche, **dadurch gekennzeichnet, daß** die Grundfarben Rot, Grün und Blau sind.

10. Vorrichtung nach einem der vorhergehenden Ansprüche, **dadurch gekennzeichnet, daß** die Farbwerte im Bereich zwischen 0 und 255 liegen.

11. Verfahren zur Erzeugung eines Kompositbildes aus einem Vordergrundbild (FG), welches ein Objekt vor einem im wesentlichen monochromen Hintergrund wiedergibt und einem Hintergrundbild (BG), bei dem
für jedes Rasterelement des Vordergrundbildes (FG) aus den Farbwerten des Rasterelements einerseits und die Farbzusammensetzung des monochromen Hintergrunds wiedergebenden vorgegebenen Farbwerten andererseits ein Steuersignal (SEP) berechnet wird, das die Zugehörigkeit des Rasterelements entweder zu dem Objekt oder zu dem monochromen Hintergrund wiedergibt und
die Farbwerte des Kompositbildes (KB₁) in jedem Rasterelement in Abhängigkeit von dem Steuersignal (SEP) aus den Farbwerten des korrespondierenden Rasterelements entweder des Vordergrundbildes (FG) oder des Hintergrundbildes (BG) berechnet werden,
**dadurch gekennzeichnet,**
**daß** für jedes Rasterelement des Kompositbildes (KB₁) aus den Farbwerten des korrespondierenden Rasterelements des Vordergrundbildes (FG) und/oder des Hintergrundbildes (BG) Korrekturwerte berechnet werden und
**daß** die Farbwerte des Kompositbildes (KB₁) zur Erreichung eines natürlichen Bilkdeindrucks in jedem Rasterelement entsprechend den Korrekturwerten verändert werden.

12. Verfahren nach Anspruch 11, **dadurch gekennzeichnet, daß** für die in dem Vordergrundbild (FG) das Objekt darstellenden Rasterelemente aus den die Farbzusammensetzung des monochromen Hintergrunds kennzeichnenden vorgegebenen Farbwerten einerseits und den Farbwerten des Rasterelements andererseits ein Transparenzwert berechnet wird, der die Transparenz des Objekts in diesem Rasterelement wiedergibt, daß die Korrekturwerte für die das Objekt darstellenden Rasterelemente des Kompositbildes in Abhängigkeit von dem Transparenzwert aus den Farbwerten des Vordergrundbildes (FG) einerseits und des Hintergrundbildes (BG) andererseits berechnet werden.

13. Verfahren nach Anspruch 11 oder 12, **dadurch gekennzeichnet,**
**daß** für die in dem Vordergrundbild (FG) den monochromen Hintergrund darstellenden Rasterelemente aus den die Farbzusammensetzung des monochromen Hintergrunds kennzeichnenden Farbwerten einerseits und den Farbwerten des Rasterelements andererseits ein erster Helligkeitswert berechnet wird, der die Intensität der von dem Objekt auf dem monochromen Hintergrund verursachten Schatten wiedergibt,
**daß** die Korrekturwerte für die das Hintergrundbild (BG) darstellenden Rasterelemente des Kompositbildes zur Rekonstruktion der von dem Objekt auf das Hintergrundbild (BG) geworfenen Schatten in Abhängigkeit von dem ersten Helligkeitswert berechnet werden.

14. Verfahren nach einem der Ansprüche 11 bis 13, **dadurch gekennzeichnet,**
**daß** für die in dem Vordergrundbild (FG) den monochromen Hintergrund darstellenden Rasterelemente aus den die Farbzusammensetzung des monochromen Hintergrunds kennzeichnenden Farbwerten einerseits und den Farbwerten des Rasterelements andererseits ein zweiter Helligkeitswert berechnet wird, der die Intensität der durch Reflexionen an dem Objekt verursachten Aufhellungen auf dem monochromen Hintergrund wiedergibt,
**daß** die Korrekturwerte für die das Hintergrundbild (BG) darstellenden Rasterelemente des Kompositbildes zur Nachbildung der Reflexionen in dem Kompositbild in Abhängigkeit von dem zweiten Helligkeitswert berechnet werden.

15. Verfahren nach einem der vorhergehenden Ansprüche,
**dadurch gekennzeichnet,**
**daß** das Hintergrundbild (BG) in mehrere Teilbereiche aufgeteilt und für jeden Teilbereiche die Durchschnittswerte der Farbwerte der einzelnen Rasterelemente berechnet wird,
**daß** die Korrekturwerte für die in dem Kompositbild das Objekt darstellenden Rasterelemente in Abhängigkeit von den Durchschnittswerten sämtlicher Teilbereiche berechnet wird.

## Claims

1. Equipment for the generation of a composite image from a foreground image (FG), which reproduces an object or a scene against a basically monochromatic background and a background image (BG), with
an initial computing unit (R4) for the generation of a control signal (SEP), identifying the association in each case of a raster element of the foreground image (FG), either with the object or with the monochromatic background, for every raster element of the foreground image (FG), depending on the color values of the raster element, on the one hand, and the color composition of the monochrome background displaying specified color values, on the other hand, as well as
a sampling unit (RS), connected, on the input side, with the first computing unit (R4), for the computation of the color values of one raster element of the composite image in each case, depending on the control signal (SEP), either from the color values of the corresponding raster element of the foreground image (FG), or from the color values of the corresponding raster element of the background image (BG),
**characterized by**
a second computing unit (R11, R12, R11, R17) for the computation of correction values for the color values of one raster element of the composite image in each case, depending on the color values of the corresponding raster element of the foreground image (FG) and/or the background image (BG), for achieving a natural pictorial effect,
an image processing unit (R19), connected, on the input side, with the second computing unit (R11, R12, R14, R17), for changing the color values of one raster element of the composite image in each case, according to the correction values computed for this raster element by the second computing unit (R11, R12, R14, R17).

2. Equipment, according to Claim 1, **characterized by** the fact that the first computing unit (R4), for the adjustment of the color values displaying the color composition of the monochrome background specified in the foreground image (FG), is connected with an initial input device (6).

3. Equipment, according to Claim 1 or 2, **characterized by** an input for the recording of the color values of one raster element of the foreground image (FG) and the background image (BG) in each case, as well as an output for outputting the color values of the corresponding raster element of the composite image (KB)

4. Equipment, according to Claim 1 or 2, **characterized by**
an input for the recording of an initial data record, representing the foreground image (FG), whose elements include the color values of one raster element of the foreground image (FG) in each case and a second data record representing the background image (BG), whose elements include the color values of one raster element of the background image (BG) in each case,
an output for the outputting of a third data record representing the composite image (KB₂), whose elements include the color values of one raster element of the composite image (KB₂) in each case.

5. Equipment, according to Claim 4, **characterized by** an initial memory matrix (1), for the storage of the first data record and/or a second memory matrix (2) for the storage of the second data record and/or a third memory matrix (21) for the storage of the third data record

6. Equipment, according to Claim 5, **characterized by** a third computing unit, connected on the input side with the initial memory matrix and, on the output side, with the initial computing unit (R4), for the computation of the specified color values identifying the monochrome background of the foreground image (FG), as an average value of the color values of the foreground image (FG).

7. Equipment, according to Claim 5 or 6, **characterized by** the fact that the second computing unit (R11, R12, R14, R17) is connected, on the output side, for the storage of a fourth data record, with a fourth memory matrix (18), where every element of the fourth data record includes the correction values computed by the second computing unit (R11, R12, R14, R17) for one raster element of the composite image in each case.

8. Equipment, according to one of the preceding claims, **characterized by** a second input device (20), connected, on the output side, with the image processing unit (R19), for the input of weighting factors for the correction values computed by the second computing unit (R11. R12, R14, R17).

9. Equipment, according to one of the preceding claims, **characterized by** the fact that the primary colors are red, green and blue.

10. Equipment, according to one of the preceding claims, **characterized by** the fact that the color values lie in the range between 0 and 255.

11. Process for the generation of a composite image from a foreground image (FG), which reproduces an object against a basically monochromatic background and a background image (BG), for which
a control signal (SEP) is computed for every raster element of the foreground image (FG) from the color values of the raster element, on the one hand, and the color composition of the monochrome background displaying specified color values, on the other hand, which expresses the association of the raster element either with the object or with the monochromatic background and
the color values of the composite image (KB₁) are computed, in every raster element, depending on the control signal (SEP), from the color values of the corresponding raster element of either the foreground image (FG) or the background image (BG),
**characterized by** the fact
that correction values are computed for every raster element of the composite image (KB₁), from the color values of the corresponding raster element of the foreground image (FG) and/or the background image (BG) and
that the color values of the composite image (KB₁), for achieving a natural image impression, are changed in every raster element according to the correction values.

12. Process, according to Claim 11, **characterized by** the fact
that a transparency value is computed for the raster elements representing the object in the foreground image (FG), from the specified color values identifying the color composition of the monochromatic background, on the one hand, and the color values of the raster element, on the other hand, which reproduces the transparency of the object in this raster element,
that the correction values are computed for the raster elements of the composite image representing the object, depending on the transparency value, from the color values of the foreground image (FG), on the one hand, and the background image (BG), on the other hand.

13. Process, according to Claim 11 or 12, **characterized by** the fact
that an initial brightness value is computed for the raster elements representing the monochromatic background in the foreground image (FG), from the color values identifying the color composition of the monochromatic background, on the one hand, and the color values of the raster element, on the other hand, which displays the intensity of the shadows caused by the object on the monochromatic background,
that the correction values are computed for the raster elements, representing the background image (BG), of the composite image, for the reconstruction of the shadows cast by the object onto the background image (BG), depending on the initial brightness value.

14. Process, according to Claims 11 to 13, **characterized by** the fact
that a second brightness value is computed for the raster elements representing the monochromatic background in the foreground image (FG), from the color values identifying the color composition of the monochromatic background, on the one hand, and the color values of the raster element, on the other hand, which displays the intensity of the brightening caused through reflections on the object on the monochromatic background,
that the correction values are computed for the raster elements, representing the background image (BG), of the composite image, for the reproduction of the reflections in the composite image, depending on the second brightness value.

15. Process, according to one of the preceding claims, **characterized by** the fact
that the background image (BG) is split into several sections and the average values of the color values of the individual raster elements are computed for each section part
that the correction values are computed for the raster elements representing the object in the composite image, depending on the average values of all section parts.

## Revendications

1. Dispositif pour générer une image composite à partir d'une image en avant-plan (FG) reflétant un objet ou une scène devant un arrière-plan essentiellement monochrome et une image en arrière-plan (BG) comprenant
une première unité de calcul (R4) pour générer un signal de commande (SEP) pour chaque élément du cadre de l'image en avant-plan (FG) et caractérisant l'appartenance respectivement d'un élément du cadre de l'image en avant-plan (FG) soit à l'objet soit à l'arrière-plan monochrome en fonction des valeurs de couleur de l'élément du cadre d'une part et d'autre part des valeurs de couleur prédéterminées reflétant la composition de couleurs de l'arrière-plan monochrome ainsi
qu'une unité de sélection (R5) reliée du côté de l'entrée à la première unité de calcul (R4) en vue du calcul des valeurs de couleur respectivement de chaque élément du cadre de l'image composite en fonction du signal de commande (SEP) soit à partir des valeurs de couleurs de l'élément du cadre correspondant de l'image en avant-plan (FG) soit à partir des valeurs de couleur de l'élément du cadre correspondant de l'image en arrière-plan (BG),
**caractérisé en ce**
**qu'**une deuxième unité de calcul (R11, R12, R14, R17) pour le calcul des valeurs de correction pour les valeurs de couleur respectivement d'un élément du cadre de l'image composite en fonction des valeurs de couleur de l'élément du cadre correspondant de l'image en avant-plan (FG) et / ou de l'image en arrière-plan (BG) en vue d'obtenir une effet d'image naturel,
une unité de traitement de l'image (R19) reliée du côté de l'entrée à la deuxième unité de calcul (R11, R12, R14, R17) en vue du changement des valeurs de couleur respectivement d'un élément du cadre de l'image composite en fonction des valeurs de correction calculées par les deux unités de calcul (R11, R12, R14, R17) pour cet élément du cadre.

2. Dispositif selon la revendication 1, **caractérisé en ce que** la première unité de calcul (R4) est reliée à une première unité d'entrée (6) en vue du réglage des valeurs de couleur prédéterminées reflétant la composition des couleurs de l'arrière-plan monochrome dans l'image en avant-plan (FG).

3. Dispositif selon l'une des revendications de 1 à 2, **caractérisé par** une entrée pour la réception des valeurs de couleur respectivement d'un élément du cadre de l'image en avant-plan (FG) et de l'image en arrière-plan (BG) ainsi que d'une sortie pour l'édition des valeurs de couleurs de l'élément du cadre correspondant de l'image composite (KB₂).

4. Dispositif selon l'une des revendications de 1 à 2, **caractérisé par**
une entrée pour la réception d'un premier article représentant l'image en avant-plan (FG) et dont les éléments comportent les valeurs de couleur respectivement d'un élément du cadre de l'image en avant-plan (FG) et un deuxième article représentant l'image en arrière-plan (BG), article, dont les éléments comportent les valeurs de couleurs de respectivement un élément du cadre de l'image en arrière-plan (BG)
une sortie pour l'édition d'un troisième article représentant l'image composite (KB₂) et dont les valeurs de couleurs comportent respectivement d'un élément du cadre de l'image composite (KB₂).

5. Dispositif selon la revendication 4, **caractérisé par** une première matrice de mémoire (1) en vue de mémoriser le premier article et / ou une deuxième matrice de mémoire (2) pour mémoriser le deuxième article et / ou une troisième matrice de mémoire (21) pour mémoriser le troisième article.

6. Dispositif selon la revendication 5, **caractérisé par** une troisième unité de calcul reliée du côté de l'entrée par une première matrice de mémoire et du côté de la sortie à la première unité de calcul (Ra) en vue du calcul des valeurs de couleur prédéterminées caractérisant l'arrière-plan monochrome de l'image en avant-plan (FG) en tant que valeur moyenne des valeurs de couleurs de l'image en avant-plan (FG).

7. Dispositif selon l'une des revendications de 5 à 6, **caractérisé en ce que** la deuxième unité de calcul (R11, R12, R14, R17) est reliée, du côté de la sortie, à une quatrième matrice de mémoire (18) en vue de mémoriser un quatrième article, chaque élément du quatrième article contenant les valeurs de correction calculées par la deuxième unité de calcul (R11, R12, R14, R17) respectivement pour un élément du cadre de l'image composite.

8. Dispositif selon l'une des revendications précédentes, **caractérisé par** une deuxième unité d'entrée (20) reliée à l'unité de traitement de l'image (R19) du côté de la sortie en vue d'entrer des facteurs de pondération pour les valeurs de correction calculées par la deuxième unité de calcul (R11, R12, R14, R17).

9. Dispositif selon l'une des revendications précédentes, **caractérisé en ce que** les couleurs de base sont le rouge, le vert et le bleu.

10. Dispositif selon l'une des revendications précédentes, **caractérisé en ce que** les valeurs de couleur sont comprises dans la plage entre 0 et 255.

11. Procédé pour générer une image composite à partir d'une image en avant-plan (FG) reflétant un objet devant un arrière-plan essentiellement monochrome et une image en arrière-plan (BG)
pour lequel est calculé, pour chaque élément du cadre de l'image en avant-plan (FG) à partir d'une part des valeurs de couleur de l'élément du cadre et d'autre part des valeurs de couleurs prédéterminées reflétant la composition des couleurs de l'arrière-plan monochrome, un signal de commande (SEP) reflétant l'appartenance de l'élément du cadre soit à l'objet soit à l'arrière-plan monochrome et
pour lequel les valeurs de couleur de l'image composite (KB₁) sont calculées dans chaque élément du cadre en fonction du signal de commande (SEP) et à partir des valeurs de couleur de l'élément du cadre correspondant soit de l'image en avant-plan (FG) soit de l'image en arrière-plan (BG),
**caractérisé en ce**
**que** des valeurs de correction sont calculées pour chaque élément du cadre de l'image composite (KB₁) à partir des valeurs de couleur de l'élément du cadre correspondant de l'image en avant-plan (FG) et / ou de l'arrière-plan et
**que** les valeurs de couleurs de l'image composite (KB₁) sont modifiées en vue d'atteindre une impression d'image naturelle dans chaque élément du cadre selon les valeurs de correction.

12. Procédé selon la revendication 11, **caractérisé en ce qu'**une valeur de transparence reflétant la valeur de l'objet dans cet élément du cadre est calculée, à partir, d'une part, des valeurs de couleur prédéterminées caractérisant la composition de couleurs de l'arrière-plan monochrome et d'autre part des valeurs de couleurs de l'élément du cadre pour les éléments du cadre représentant l'objet dans l'image en avant-plan (FG),
que les valeurs de correction pour les éléments du cadre de l'image composite représentant l'objet sont calculées en fonction de la valeur de transparence en provenance des valeurs de couleur de l'image en avant-plan (FG) d'une part et de l'image en arrière-plan (BG) d'autre part.

13. Procédé selon l'une des revendications de 11 à 12, **caractérisé en ce**
**qu'**une première valeur de luminosité reflétant l'intensité de l'ombre provoquée par l'objet sur l'arrière-plan monochrome, destinée aux éléments du cadre représentant l'arrière-plan monochrome dans l'image en avant-plan (FG) est calculée à partir d'une part des valeurs de couleur caractérisant la composition des couleurs de l'arrière-plan monochrome et d'autre part des valeurs de couleur de l'élément du cadre,
**que** les valeurs de correction pour les éléments du cadre de l'image composite représentant l'image en arrière-plan (BG) sont calculées en vue de la reproduction des ombres projetées sur l'image en arrière-plan (BG) en fonction de la première valeur de luminosité.

14. Procédé selon l'une des revendications de 11 à 13, **caractérisé en ce**
**qu'**une deuxième valeur de luminosité reflétant l'intensité des éclaircissements provoqués par la réflexion sur l'objet sur l'arrière-plan monochrome, destinée aux éléments du cadre représentant l'arrière-plan monochrome dans l'image en avant-plan (FG) est calculée à partir d'une part des valeurs de couleur caractérisant la composition des couleurs de l'arrière-plan monochrome et d'autre part des valeurs de couleur de l'élément du cadre,
**que** les valeurs de correction pour les éléments du cadre de l'image composite représentant l'image en arrière-plan (BG) sont calculés en vue de la reproduction des réflexions dans l'image composite en fonction de la deuxième valeur de luminosité.

15. Procédé selon l'une des revendications précédentes, **caractérisé en ce**
**que** l'image en arrière-plan (BG) est divisée en plusieurs sous-zones et que la valeur moyenne des valeurs de couleur de chaque élément du cadre est calculée, que les valeurs de correction pour les éléments du cadre représentant l'objet dans l'image composite sont calculées en fonction des valeurs moyennes de toutes les sous-zones.
